(19) **Europäisches Patentamt**
**European Patent Office**
**Office européen des brevets**

(11) **EP 4 718 353 A1**

(12) **EUROPEAN PATENT APPLICATION**

(43) Date of publication:
**01.04.2026 Bulletin 2026/14**

(21) Application number: **25205079.4**

(22) Date of filing: **26.09.2025**

(51) International Patent Classification (IPC):
*G06Q 10/0631* (2023.01)   *G06Q 10/0639* (2023.01)
*G06Q 50/06* (2024.01)   *G06F 11/30* (2006.01)
*G06F 11/34* (2006.01)   *H04N 7/15* (2006.01)

(52) Cooperative Patent Classification (CPC):
**G06Q 10/0639; G06F 11/3062; G06F 11/34;**
**G06Q 10/06313; G06Q 50/06;** H04N 7/15

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **26.09.2024 US 202418898568**

(71) Applicant: **Mitel Networks Corporation**
**Ottawa, Ontario K2K 3K1 (CA)**

(72) Inventors:
- **Murthy, Tejas**
  **560078 Bangalore (IN)**
- **Trivedi, Rachit**
  **560077 Bangalore (IN)**
- **Naidoo, Logendra**
  **Ottawa, K1S 0W8 (CA)**

(74) Representative: **McDougall, James et al**
**Venner Shipley LLP**
**200 Aldersgate**
**London EC1A 4HD (GB)**

(54) **SYSTEMS AND METHODS FOR ENVIRONMENTAL IMPACT ASSESSMENT FOR ONLINE**

(57)   An automated computer-implemented process can be executed by a monitoring server for real-time environmental impact assessment of a distributed computer system. The process includes receiving power metrics from metrics sources, the power metrics representing power usage by resources of the distributed computer system. The process further includes determining environmental impact metrics that represent amounts of $CO_2$ emissions created by the distributed computer system. The process further includes comparing the environmental impact metrics with a $CO_2$ emissions benchmark. The process further includes determining that the environmental impact metrics exceed the $CO_2$ emissions benchmark. The process further includes outputting for display to a participant of a virtual meeting a prompt with a suggestion for executing a remedial measure that reduces $CO_2$ emissions created by the distributed computer system.

Processed by Luminess, 75001 PARIS (FR)

EP 4 718 353 A1

**Description**

FIELD

This disclosure relates to virtual meetings. More particularly, the disclosure relates to methods and systems for automated determination of sustainability of distributed computer systems.

BACKGROUND

Electronic computing has evolved from primitive, vacuum-tube-based computer systems to modem electronic computing systems in which large numbers of multi-processor computer systems, such as server computers, work stations, and other individual computing systems are networked together with large-capacity data-storage devices and other electronic devices to produce geographically distributed computing systems with numerous components that provide enormous computational bandwidths and data-storage capacities. These large, distributed computing systems are made possible by advances in computer networking, distributed operating systems and applications, data-storage appliances, computer hardware, and software technologies.

Many of the routine operations performed in a distributed computing system-including processing, storing, sending, and receiving data-consume large amounts of electricity. For example, large distributed computing systems, such as large data centers, consume as much electricity as a city with a population of a million people. Data centers worldwide consume more than two percent of the world's electricity, corresponding to $CO_2$ ("carbon dioxide") emissions that match the airline industry. Streaming data to and from data centers is also doubling every four years, which adds to the increasing demand for electricity and increasing $CO_2$ emissions. Video streaming, for example, is expected to make up about 91 percent of Internet traffic by 2025, which is up from about 73 percent in 2016.

Although data centers provide much of the world's digital services and big data storage, the number and size of data centers are expected to increase well into the future, leading to an overall increase in energy usage and $CO_2$ emissions. As a result, data center sustainability is increasingly becoming a priority for data center owners and operators. Sustainability is the discipline of using available resources in a way that does not completely deplete the resources and maintains a balance between supply and demand for resources. Data center owners and managers seek processes and systems that can be used to reduce energy consumption and related $CO_2$ emissions.

SUMMARY

A first aspect of this disclosure provides an automated computer-implemented process executed by a monitoring server for real-time environmental impact assessment of a distributed computer system, the process comprising: receiving power metrics from metrics sources, the power metrics representing power usage by resources of the distributed computer system; determining environmental impact metrics that represent amounts of CO2 emissions created by the distributed computer system; comparing the environmental impact metrics with a CO2 emissions benchmark; determining that the environmental impact metrics exceed the CO2 emissions benchmark; and outputting for display to a participant of a virtual meeting a prompt with a suggestion for executing a remedial measure that reduces the CO2 emissions created by the distributed computer system.
The determining environmental impact metrics may include computing CO2 emissions of the resources used by the distributed computer system based on the power usage by the resources.

The process may further comprise automatically executing the remedial measure that reduces the CO2 emissions created by the distributed computer system.

The process may further comprise outputting for display to the participant of the virtual meeting a user interface with environmental impact indicators based on the CO2 emissions created by the distributed computer system.

The metrics sources may include at least one of a virtual object or a physical object.

The metrics sources may include a resource for the distributed computer system.

The determining the environmental impact metrics may include aggregating the power metrics from the metrics sources with at least one of data transmission rates, resource utilization levels, and cooling requirements, and converting these aggregated metrics into a representative amount of CO2 emissions created by the distributed computer system.

The remedial measure may include at least one of: reducing a number of participants in the virtual meeting; reducing a duration of the virtual meeting; reducing a data transmission rate; or reducing a resolution of a video stream in the virtual meeting.

A second aspect of this disclosure provides a computer system that monitors real-time environmental impact of a distributed computer system, the computer system including one or more processors, one or more data-storage devices, and machine-readable instructions stored in the one or more data-storage devices that when executed using the one or more processors controls the computer system to preform operations comprising: receiving power metrics from metrics sources, the power metrics representing power usage by resources of the distributed computer system; determining environmental impact metrics that represent amounts of $CO_2$ emissions created by the distributed computer system; comparing the environmental impact metrics with a $CO_2$ emissions benchmark; determining that the environmental impact metrics exceed the $CO_2$ emissions benchmark; and outputting for display to a participant of a virtual meeting a prompt with a suggestion for executing a remedial measure that reduces the $CO_2$ emissions created by the distributed computer system.

The determining environmental impact metrics may include computing $CO_2$ emissions of the resources used by the distributed computer system based on the power usage by the resources.

The operations may further comprise automatically executing the remedial measure that reduces the $CO_2$ emissions created by the distributed computer system.

The metrics sources may include at least one of a virtual object, a physical object, or a resource for the distributed computer system.

The remedial measure may include at least one of: reducing a number of participants in the virtual meeting; reducing a duration of the virtual meeting; reducing a data transmission rate; or reducing a resolution of a video stream in the virtual meeting.

A third aspect of this disclosure provides a non-transitory computer-readable medium encoded with machine-readable instructions that when executed using one or more processors of a computer system control the one or more processors to execute operations comprising: receiving power metrics from metrics sources, the power metrics representing power usage by resources of a distributed computer system; determining environmental impact metrics that represent amounts of $CO_2$ emissions created by the distributed computer system; comparing the environmental impact metrics with a $CO_2$ emissions benchmark; determining that the environmental impact metrics exceed the $CO_2$ emissions benchmark; and outputting for display to a participant of a virtual meeting a prompt with a suggestion for executing a remedial measure that reduces the $CO_2$ emissions created by the distributed computer system.

The determining environmental impact metrics may include computing $CO_2$ emissions of the resources used by the distributed computer system based on the power usage by the resources.

The operations may further comprise automatically executing the remedial measure that reduces the $CO_2$ emissions created by the distributed computer system.

The metrics sources may include a virtual object.

The metrics sources may include a physical object.

The metrics sources may include a resource for the distributed computer system.

The remedial measure includes at least one of: reducing a number of participants in the virtual meeting; reducing a duration of the virtual meeting; reducing a data transmission rate; or reducing a resolution of a video stream in the virtual meeting.

BRIEF DESCRIPTION OF THE DRAWINGS

The subject matter of the present disclosure is particularly pointed out and distinctly claimed in the concluding portion of this specification. A more complete understanding of the present disclosure, however, may best be obtained by referring to the detailed description and claims when considered in connection with the drawing figures, wherein like numerals denote like elements and wherein:

FIG. 1 illustrates an architectural diagram for various types of computers.
FIG. 2 illustrates an Internet-connected distributed computer system.
FIG. 3 illustrates cloud computing.
FIG. 4 illustrates a flow diagram of an example implementation of a method that determines environmental impact of a distributed computer system according to aspects of this disclosure.
FIG. 5A and FIG. 5B illustrate an example graphical user interface (GUI) showing acceptable and high emissions data during a virtual meeting, respectively, according to aspects of this disclosure.
FIG. 6 illustrates an example GUI showing emissions data during a virtual meeting according to aspects of this disclosure.

It will be appreciated that elements in the figures are illustrated for simplicity and clarity and have not necessarily been drawn to scale. For example, the dimensions of some of the elements in the figures may be exaggerated relative to other elements to help to improve understanding of illustrated embodiments of the present invention.

DETAILED DESCRIPTION

The following detailed description of various embodiments herein refers to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

The process flows and screenshots depicted are merely embodiments and, unless otherwise noted, are not intended to limit the scope of the disclosure. For example, the steps recited in any of the method or process descriptions may be executed in any order and are not limited to the order presented. It will be appreciated that the following description makes appropriate references not only to the steps and user interface elements, but also to the various system components as described herein. It should be understood that, although exemplary embodiments are illustrated in the figures and described herein, the principles of the present disclosure may be implemented using any number of techniques, whether currently known or not. The present disclosure should in no way be limited to the exemplary implementations and techniques illustrated in the drawings and described below. Unless otherwise specifically noted, articles depicted in the drawings are not necessarily drawn to scale.

Computer programs (also referred to as computer control logic) can be stored in main memory and/or secondary memory. Computer programs may also be received via communications interface. Such computer programs, when executed, enable the computer system to perform the features as discussed herein. In particular, the computer programs, when executed, enable the processor to perform the features of various embodiments. Accordingly, such computer programs represent controllers of the computer system.

These computer program instructions may be loaded onto a general-purpose computer, special purpose computer, or other programmable data processing apparatus to produce a machine, such that the instructions that execute on the computer or other programmable data processing apparatus create means for implementing the functions specified in the flowchart block or blocks. These computer program instructions may also be stored in a computer-readable memory that can direct a computer or other programmable data processing apparatus to function in a particular manner, such that the instructions stored in the computer-readable memory produce an article of manufacture including instruction means which implement the function specified in the flowchart block or blocks. The computer program instructions may also be loaded onto a computer or other programmable data processing apparatus to cause a series of operational steps to be performed on the computer or other programmable apparatus to produce a computer-implemented process such that the instructions which execute on the computer or other programmable apparatus provide steps for implementing the functions specified in the flowchart block or blocks.

In various embodiments, software may be stored in a computer program product and loaded into a computer system using a removable storage drive, hard disk drive, or communications interface. The control logic (software), when executed by the processor, causes the processor to perform the functions of various embodiments as described herein. In various embodiments, hardware components may take the form of application specific integrated circuits (ASICs). Implementation of the hardware so as to perform the functions described herein will be apparent to persons skilled in the relevant art(s).

As will be appreciated by one of ordinary skill in the art, the system disclosed herein may be embodied as a customization of an existing system, an add-on product, a processing apparatus executing upgraded software, a stand-alone system, a distributed system, a method, a data processing system, a device for data processing, and/or a computer program product. Accordingly, any portion of the system or a module may take the form of a processing apparatus executing code, an internet-based embodiment, an entirely hardware-based embodiment, or an embodiment combining aspects of the internet, software, and hardware. Furthermore, the system may take the form of a computer program product on a computer-readable storage medium having computer-readable program code means embodied in the storage medium. Any suitable computer-readable storage medium may be utilized, including hard disks, optical storage devices, magnetic storage devices, and/or the like.

The system and method may be described herein in terms of functional block components, screen shots, optional selections, and various processing steps. It should be appreciated that such functional blocks may be realized by any number of hardware and/or software components configured to perform the specified functions. For example, the system may employ various integrated circuit components, e.g., memory elements, processing elements, logic elements, look-up tables, and the like, which may carry out a variety of functions under the control of one or more microprocessors or other control devices. Similarly, the software elements of the system may be implemented with any programming or scripting language such as C, C++, C#, JAVA®, JAVASCRIPT®, JAVASCRIPT® Object Notation (JSON), VBScript, Macromedia COLD FUSION, COBOL, MICROSOFT® company's Active Server Pages, assembly, PERL® , PHP, awk, PYTHON®, Visual Basic, SQL Stored Procedures, PL/SQL, any UNIX® shell script, and extensible markup language (XML) with the various algorithms being implemented with any combination of data structures, objects, processes, routines or other programming elements. Further, it should be noted that the system may employ any number of techniques for data transmission, signaling, data processing, network control, and the like. Still further, the system could be used to detect or prevent security issues with a client-side scripting language, such as JAVASCRIPT®, VBScript, or the like.

For the sake of brevity, data networking, application development, and other functional aspects of the systems (and components of the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in a practical system.

As used herein the term, "engine" refers to logic embodied in hardware or software instructions, which can be written in a programming language, such as C, C++, Objective-C, COBOL, JAVA™, JAVASCRIPT®, JAVASCRIPT® Object Notation (JSON), PHP, Perl, HTML, CSS, JavaScript, Ruby, VBScript, ASPX, Microsoft .NET™ languages such as C#, and/or the like. An engine may be compiled into executable programs or written in interpreted programming languages. Software engines may be callable from other engines or from themselves. Engines described herein refer to one or more logical modules that can be merged with other engines or applications or can be divided into sub-engines. The engines can be stored in non-transitory computer-readable medium or computer storage device and be stored on and executed by one or more general purpose computers, thus creating a special purpose computer configured to provide the engine. In various aspects, an engine can include a large language model (LLM), among other components and/or functions.

According to various embodiments, the aspects of the present disclosure are implemented using a combination of both the hardware and the software. As used herein, the term "server" as described herein may include server hardware, server software, applications and/or services hosted by the server, and/or combinations thereof. The meeting system may also use one or more database systems communicatively coupled to the one or more servers for storing various data, such as, meeting data, participant data and/or the like.

The various system components discussed herein may include one or more of the following: a host server or other computing systems including a processor for processing digital data; a memory coupled to the processor for storing digital data; an input digitizer coupled to the processor for inputting digital data; an application program stored in the memory and accessible by the processor for directing processing of digital data by the processor; a display device coupled to the processor and memory for displaying information derived from digital data processed by the processor; and a plurality of databases. Various databases used herein may include meeting participant data; meeting data; and/or like data useful in the operation of the system. As those skilled in the art will appreciate, a computer may include an operating system (e.g., Windows NT, Windows 95/98/2000, Windows XP, Windows Vista, Windows 7, Windows 10, OS2, UNIX, Linux, Solaris, MacOS, etc.) as well as various conventional support software and drivers typically associated with computers.

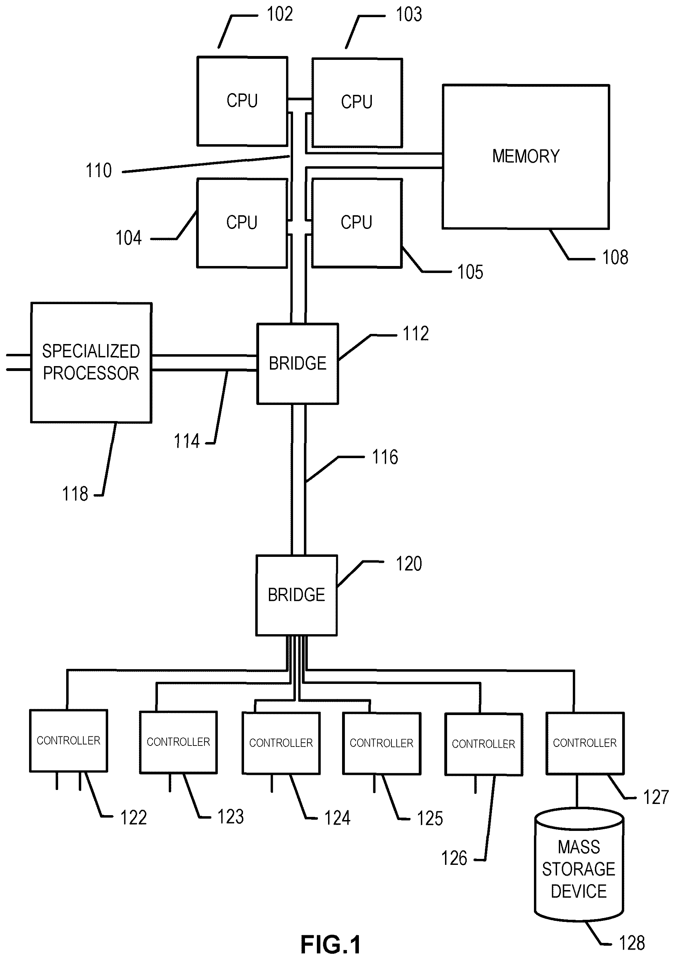

FIG. 1 illustrates a general architectural diagram for various types of computers. Computers that receive, process, and store event messages may be described by the general architectural diagram shown in FIG. 1, for example. The computer system contains one or multiple central processing units ("CPUs") 102-105, one or more electronic memories 108 interconnected with the CPUs by a CPU/memory-subsystem bus 110 or multiple busses, a first bridge 112 that interconnects the CPU/memory-subsystem bus 110 with additional busses 114 and 116, or other types of high-speed interconnection media, including multiple, high-speed serial interconnects. These busses or serial interconnections, in turn, connect the CPUs and memory with specialized processors, such as a graphics processor 118, and with one or more additional bridges 120, which are interconnected with high-speed serial links or with multiple controllers 122-127, such as controller 127, that provide access to various different types of mass-storage devices 128, electronic displays, input devices, and other such components, subcomponents, and computational devices. It should be noted that computer-readable data-storage devices can include optical and electromagnetic disks, electronic memories, and other physical data-storage devices.

There are many different types of computer-system architectures that differ from one another in the number of different memories, including different types of hierarchical cache memories, the number of processors and the connectivity of the processors with other system components, the number of internal communications busses and serial links, and in many other ways. However, computer systems generally execute stored programs by fetching instructions from memory and executing the instructions in one or more processors. Computer systems include general-purpose computer systems, such as personal computers ("PCs"), various types of server computers and workstations, and higher-end mainframe computers, but may also include a plethora of various types of special-purpose computing devices, including data-storage systems, communications routers, network nodes, tablet computers, and mobile telephones, among others.

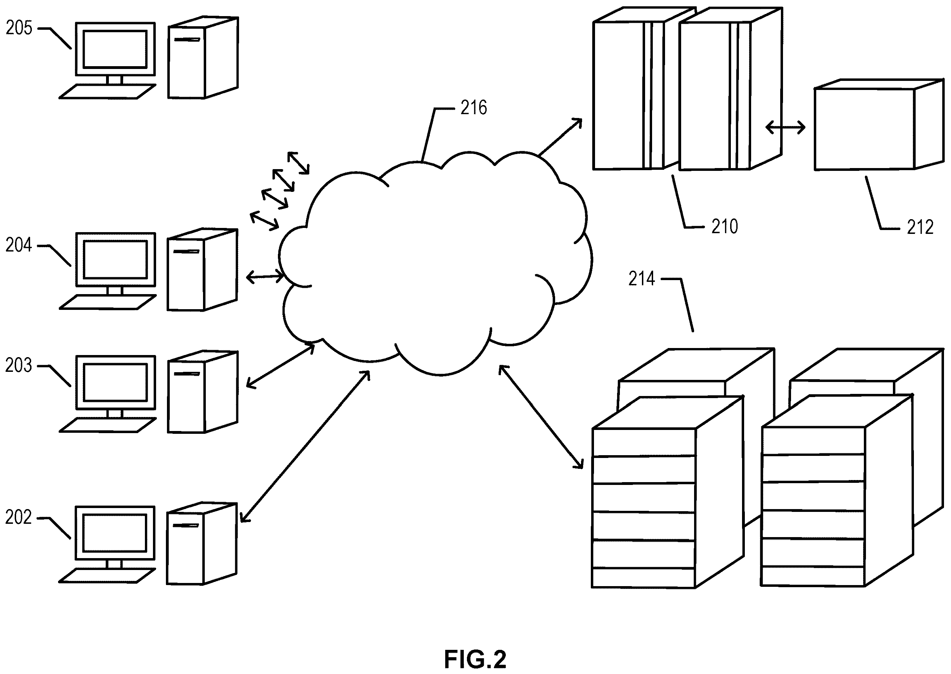

FIG. 2 shows an Internet-connected distributed computer system. As communications and networking technologies have evolved in capability and accessibility, and as the computational bandwidths, data-storage capacities, and other capabilities and capacities of various types of computer systems have steadily and rapidly increased, much of modem computing now generally involves large distributed systems and computers interconnected by local networks, wide-area networks, wireless communications, and the Internet. FIG. 2 shows a typical distributed system in which a plurality of PCs 202-205, a high-end distributed mainframe system 210 with a large data-storage system 212, and a large computer center 214 with large numbers of rack-mounted server computers or blade servers all interconnected through various communications and networking systems that together comprise the Internet 216. Such distributed computer systems provide diverse arrays of functionalities. For example, a PC user may access hundreds of millions of different web sites provided by hundreds of thousands of different web servers throughout the world and may access high-computational-bandwidth computing services from remote computer facilities for running complex computational tasks.

Until recently, computational services were generally provided by computer systems and data centers purchased, configured, managed, and maintained by service-provider organizations. For example, an e-commerce retailer generally purchased, configured, managed, and maintained a data center including numerous web server computers, back-end computer systems, and data-storage systems for serving web pages to remote customers, receiving orders through the web-page interface, processing the orders, tracking completed orders, and other myriad different tasks associated with an e-commerce enterprise.

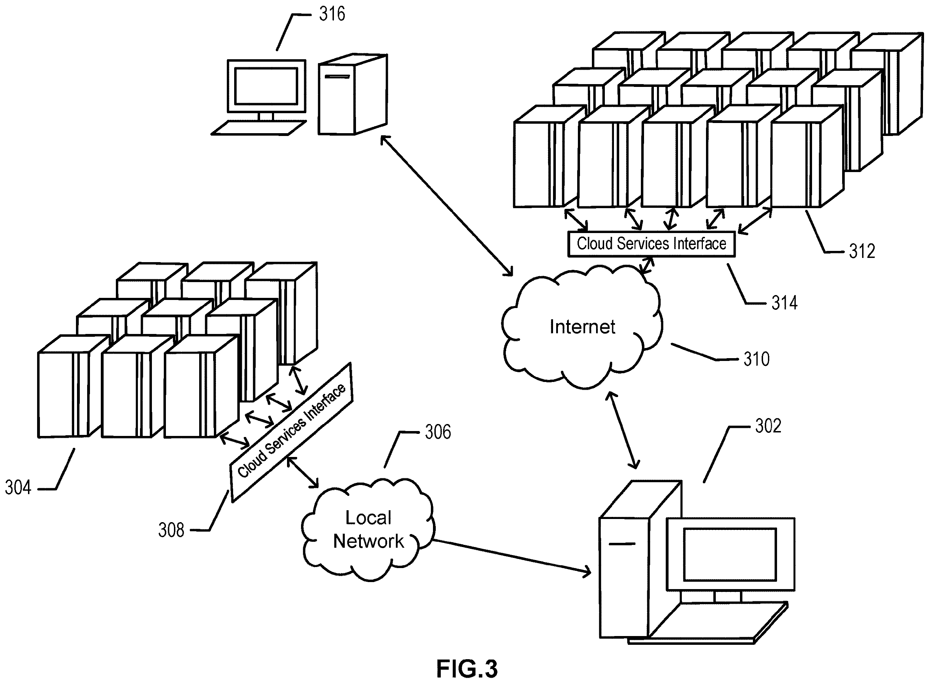

FIG. 3 shows cloud computing. In the recently developed cloud-computing paradigm, computing cycles and data-storage facilities are provided to organizations and individuals by cloud-computing providers. In addition, larger organizations may elect to establish private cloud-computing facilities in addition to, or instead of, subscribing to computing services provided by public cloud-computing service providers. In FIG. 3, a system administrator for an organization, using a PC 302, accesses the organization's private cloud 304 through a local network 306 and private-cloud interface 308 and accesses, through the Internet 310, a public cloud 312 through a public-cloud services interface 314. The administrator can, in either the case of the private cloud 304 or public cloud 312, configure virtual computer systems and even entire virtual data centers and launch execution of application programs on the virtual computer systems and virtual data centers in order to carry out any of many different types of computational tasks. As one example, a small organization may configure and run a virtual data center within a public cloud that executes web servers to provide an e-commerce interface through the public cloud to remote customers of the organization, such as a user viewing the organization's e-commerce web pages on a remote user system 316.

Cloud-computing facilities are intended to provide computational bandwidth and data-storage services much as utility companies provide electrical power and water to consumers. Cloud computing provides enormous advantages to small organizations without the devices to purchase, manage, and maintain in-house data centers. Such organizations can dynamically add and delete virtual computer systems from their virtual data centers within public clouds in order to track computational-bandwidth and data-storage needs, rather than purchasing sufficient computer systems within a physical data center to handle peak computational-bandwidth and data-storage demands. Moreover, small organizations can completely avoid the overhead of maintaining and managing physical computer systems, including hiring and periodically retraining information-technology specialists and continuously paying for operating-system and database-management-system upgrades. Furthermore, cloud-computing interfaces allow for easy and straightforward configuration of virtual computing facilities, flexibility in the types of applications and operating systems that can be configured, and other functionalities that are useful even for owners and administrators of private cloud-computing facilities used by a single organization.

It should be noted that virtual hardware layers, virtualization layers, and guest operating systems are all physical entities that are implemented by computer instructions stored in physical data-storage devices, including electronic memories, mass-storage devices, optical disks, magnetic disks, and other such devices. The term "virtual" does not, in any way, imply that virtual hardware layers, virtualization layers, and guest operating systems are abstract or intangible. Virtual hardware layers, virtualization layers, and guest operating systems execute on physical processors of physical computer systems and control operation of the physical computer systems, including operations that alter the physical states of physical devices, including electronic memories and mass-storage devices. They are as physical and tangible as any other component of a computer, such as power supplies, controllers, processors, busses, and data-storage devices.

As used herein, a "resource" may be a physical resource of a server computer or a distributed computer system, such as, but are not limited to, a processor, a core, memory, a network connection, network interface, data-storage device, a mass-storage device, a switch, a router, and any other component of the distributed computer system. Resources of a server computer and clusters of server computers may form a resource pool for creating virtual resources of a virtual infrastructure used to run virtual objects. A resource pool is a partition of computing and memory resources from a host or a cluster. A resource may be a virtual resource, which may have been formed from physical resources used by a virtual object. For example, a resource may be a virtual processor formed from one or more cores of a multicore processor, virtual memory formed from a portion of physical memory, virtual storage formed from a sector or image of a hard disk drive, a virtual switch, or a virtual router. An object may be a physical object or a virtual object. Examples of physical objects include a server computer, network device, a workstation, and a PC. Examples of virtual objects include an application, a virtual machine, a virtual network device, an application, and a container. A virtual infrastructure comprises the virtual resources and virtual objects of a data center, the virtual resources and virtual objects of a cluster, or the virtual resources and virtual objects of a single server computer.

A method for real-time environmental impact assessment and optimization within virtual meetings is described herein. The method can easily be adapted to application environments in general that are carbon. At its core, the method utilizes advanced algorithms and data analytics to precisely measure the ecological cost of digital interactions. By analyzing factors such as server energy usage, participant locations, meeting duration, and data transmission rates, the method provides comprehensive insights into the true environmental footprint generated during virtual collaborations.

The method can integrate predictive modeling capabilities, enabling it to dynamically recommend eco-friendly communication practices to users. For instance, if high carbon emissions are detected, the method can suggest routing changes to prioritize low-emission pathways. The method can also propose adjustments that adhere to the path-of-least-carbon-footprint such as switching from high-definition to standard-definition video, optimizing server usage, or even encouraging offline discussions when feasible. This proactive approach to emission reduction tends to ensure that sustainability considerations are seamlessly integrated into application and virtual communication workflows, enhancing environmental consciousness among users and service providers.

Examples of large carbon footprints in virtual collaborations include:

- Excess participants in conference calls beyond those needed for effective communication.
- Unnecessary use of uncompressed codecs or high-bitrate media increases data transmission and energy use.
- Conducting high-resolution (HD) video calls when not needed boosts energy consumption.
- Overusing screen sharing or presentation features during meetings.
- Recording meetings that do not require documentation leads to extra data storage and energy use.
- Excessive use of virtual backgrounds or filters increases device energy consumption.
- Unclear agendas or poor meeting management waste time and resources.
- Allowing idle or minimal engagement prolongs meetings and increases energy use.
- Storing large amounts of data for long periods continuously uses server resources.
- Leaving the meeting bridge active when not needed wastes energy.
- Running multiple concurrent sessions or breakouts in a single conference which increases server load and energy consumption.
- Frequent re-uploading and downloading of large files during meetings contributes to excessive data transfer and energy use.
- Copying file attachments to meeting invitations and distributing these invitations instead of single-sourcing from a cloud server location.

Components and steps involved in measuring and optimizing the carbon footprint across traditional and cloud application frameworks, such as those used in virtual meetings, are described below.

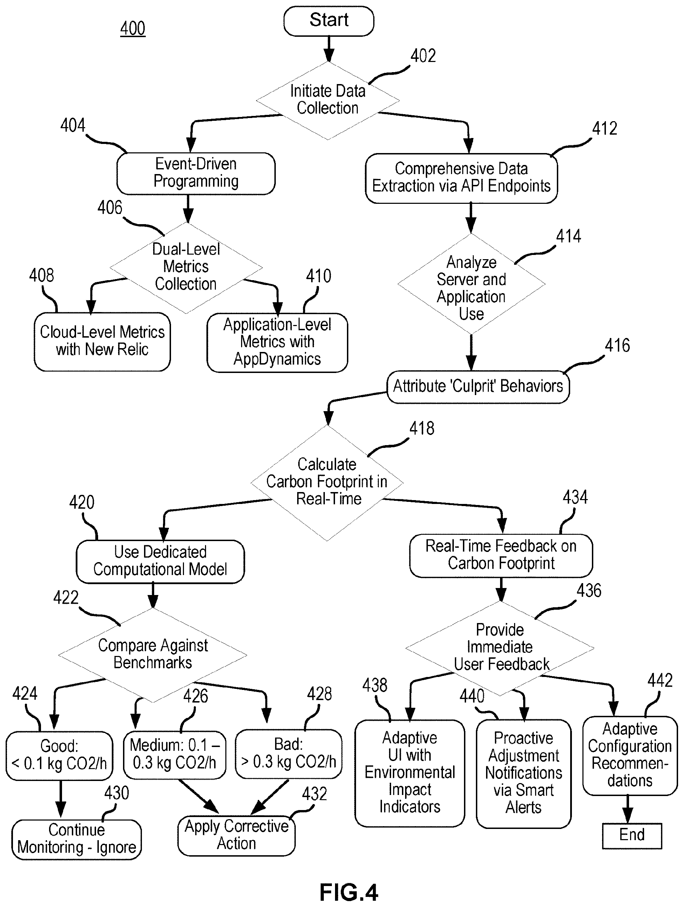

FIG. 4 is a flow diagram illustrating an example implementation of a method 400 that determines sustainability of a distributed computer system. The method 400 can be performed by a server (e.g., see large computer center 214 of FIG. 2), a host computer (e.g., see PCs 202-205 of FIG. 2), or any other suitable processor in electronic communication with the distributed computer system. Accordingly, the method 400 can be a flow diagram of a computer program or computer control logic stored in memory. The method 400, when executed, enables the computer system to perform the features as discussed herein.

In block 402, data collection is initiated. Power metrics for resources used by a distributed computer system can be received from the resources or retrieved from a data storage device. In various aspects, the data collection utilizes event-driven programming (block 404). For example, the system can employ event "listeners" or data "hooks" embedded within the virtual meeting software to actively monitor and log actions such as video conferencing initiation, the number of participants in multi-party conferences, and use of features like screen sharing and file sharing. This can be facilitated by a middleware layer that interprets user actions into measurable events for analysis. Example features that can be monitored include, but are not limited to, video conferencing (e.g., tracks start, duration, and quality of video streams), multi-party conferences (e.g., monitors participant counts and adjusts based on the necessity, ensuring only required individuals are present), screen sharing (e.g., logs frequency and duration of screen sharing sessions), file sharing (e.g., captures instances and sizes of files shared during meetings), document collaboration (e.g., observes interactions within shared documents), virtual whiteboard (e.g., records usage instances and engagement levels), polls and surveys (e.g., tracks creation and participation details), breakout rooms (e.g., monitors usage and participant numbers in breakout sessions), virtual backgrounds and effects (e.g., notes the use of computational resource-intensive features), and screen recording and playback (e.g., logs when meetings are recorded and accessed for playback).

In various aspects, the method can include utilizing dual-level metrics collection through integrated performance monitoring tools (block 406). In various aspects, the method includes collecting cloud-level metrics (block 408). Cloud-level metrics can include data points (e.g., server energy usage, amount of storage, network bandwidth, actual power consumed, etc.) about services running in the Cloud. Cloud-level metrics can include various data points about individual computer systems or networks which exist within the distributed computer system. The data points can also relate to the operations of individual software applications which are running within the distributed computer system. Block 408 can be performed utilizing one or more monitoring systems or monitoring software applications to monitor the operations of the distributed computer system. Performance monitoring tools like New Relic use automated agents within the server infrastructure to gather cloud-level metrics such as CPU usage, memory utilization, and I/O operations.

In various aspects, the method includes collecting application-level metrics (block 410). Application-level metrics can include data points (e.g., energy usage, amount of storage, network bandwidth, actual power consumed, etc.) about services running on a PC. Performance monitoring tools like AppDynamics use automated agents deployed at the application level to capture transaction traces, error rates, and response times, providing a detailed view of application performance impacts. Block 408 and block 410 can be performed simultaneously. In this manner, the system can build an understanding of both cloud infrastructure and application-specific performance, beneficial for accurately assessing the environmental impact of virtual meetings. Additional parameters that can be tracked include participant location (e.g., larger geographical distributions can lead to larger energy usage and larger carbon footprint).

The system can obtain information reported by those separate monitoring systems, often through APIs provided with those monitoring systems or monitoring software applications. Examples of such monitoring systems or monitoring software applications include Graphite, New Relic, Appdynamics, Datadog, Ruxit (by Dynatrace), Takipi, Rollbar, Sensu, Nagios, Zabbix, ELK Stack, as well as virtually any other production environment monitoring tool.

In various aspects, the method includes implementing comprehensive data extraction via API endpoints (block 412). The system can use RESTful APIs (two computer systems used to exchange information over the internet) to extract a broad spectrum of data, including server load statistics, bandwidth usage, and user engagement metrics from cloud services. Data from virtual meeting applications include participant engagement times, active vs. idle status, and feature utilization rates, which are beneficial for assessing environmental impact.

In various aspects, the method includes analyzing server and application use to attribute energy consumption (block 414). The system can attribute "culprit" behaviors resulting from analyzing the data collected from both cloud and application levels (e.g., data collected at blocks 408 and 410) to determine how different behaviors and usages impact energy consumption (block 416). The system can process collected data using an analytics engine that differentiates between energy consumed by cloud-hosted services (e.g., analyzing data center logs and server performance metrics) and local application processing (e.g., evaluating local compute metrics like application-specific CPU and GPU usage). The analytics engine can be custom built.

Power metrics (energy consumption of various components in the computer system) may not be the only way to measure environmental impact. In various aspects, environmental impact metrics can be calculated or determined by aggregating power metrics from metrics sources, data transmission rates, resource utilization levels, and/or cooling requirements. These aggregated metrics can be converted into a representative amount of CO2 emissions created by the distributed computer system. Data transmission rates in the network can indicate the energy used by network devices. Resource utilization can refer to CPU load and/or memory usage, which may influence power metrics.

In various aspects, the method includes calculating the carbon footprint in real-time (block 418). The carbon footprint can be calculated in real-time using a dedicated computational model (block 420). Any dynamic modeling tool that calculates the carbon footprint of each meeting component based on real-time server and application data can be used. The tool can adjust its calculations based on varying factors such as server efficiency, power source (renewable vs. non-renewable), and actual usage patterns. The tool can be a dynamic modeling software such as Cloud Carbon Footprint (open-source tool that supports, MS Azure AWS, Google), Greenly, Ecometrica, Plan A, etc. intended to estimate energy usage and carbon emissions. The carbon calculation tool can be connected with performance monitoring systems like New Relic or AppDynamics. Conversion factors can be set up in the tool to translate usage metrics into energy consumption. Regional energy mix data can be input into the tool to adjust the carbon footprint calculation based on renewable vs. non-renewable sources. The tool can be configured to analyze data in real-time and provide dynamic carbon footprint outputs. The tool's outputs can be used to offer real-time feedback and suggestions for reducing carbon footprint during meetings.

In various aspects, the method includes comparing the tool's outputs (e.g., carbon footprint) against benchmarks using a continuous compliance monitoring system (block 422). The method can include comparing real-time environmental data against established benchmarks based on industry standards and past performance data. This system can help identify deviation from expected environmental impacts and highlights areas needing improvement. As an example, $CO_2$ emissions per hour per participant can be calculated and compared against benchmarks. For example, the carbon footprint can be considered to be good if the $CO_2$ emission are less than a first predetermined $CO_2$ emissions benchmark, such as 0.1 kg $CO_2$/hour (block 424). The carbon footprint can be considered to be medium if the $CO_2$ emission are between than the first predetermined $CO_2$ emissions benchmark and a second predetermined $CO_2$ emissions benchmark, such as between 0.1 kg $CO_2$/hour and 0.3 kg $CO_2$/hour (block 426). The carbon footprint can be considered to be bad if the $CO_2$ emission are greater than the second predetermined $CO_2$ emissions benchmark, such as 0.3 kg $CO_2$/hour (block 428). In response to the calculated $CO_2$ emissions being good, the method can continue to monitor carbon footprint metrics of the distributed computer system (block 430).

In response to the calculated $CO_2$ emissions being medium or bad, the method can apply a corrective action or remedial measure (block 432). Example remedial measures include reducing a number of participants in a virtual meeting, reducing a duration of the virtual meeting, reducing a data transmission rate, and reducing a resolution of a video stream in the virtual meeting. Further example remedial measures include consolidating virtual objects onto fewer server computers, reclaiming capacity of resources used by idle virtual objects, powering down unused server computers, or powering down server computers running idle virtual objects.

In an example, $CO_2$ emissions are calculated per hour per participant, such as 0.004 kg CO2/hour/participant. $CO_2$ emissions value can be based on the average emissions from electricity used to power the servers and the devices of participants during a typical one-hour video conference. The calculation can account for a mix of energy sources, including a standard percentage of renewable energy as per regional availability. In various aspects, in response to a virtual meeting's emissions exceeding, for example, 0.004 kg $CO_2$ per hour for each participant, the virtual meeting's emissions can be flagged as higher than the desired environmental impact. A meeting with 25 participants should not exceed, for example, 0.1 kg of $CO_2$ in total for one hour. If the meeting does exceed this value, the system can suggest corrective actions such as reducing video quality, optimizing data transmission, or scheduling during hours with higher renewable energy availability.

In various aspects, the method includes providing real-time feedback on the carbon footprint (block 434).

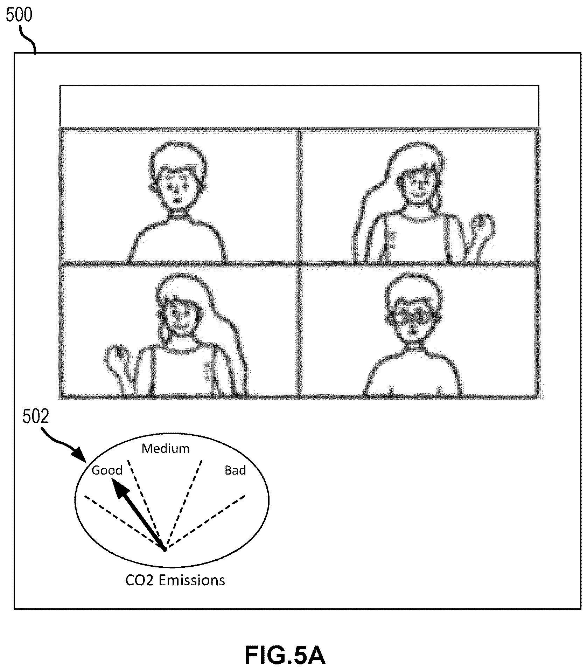

In various aspects, the method 400 includes providing immediate user feedback (block 436). The user feedback can be provided through an adaptive user interface (UI) (block 438), for example see FIG. 5A through FIG. 6. The adaptive UI can be updated in real-time to reflect environmental impacts, utilizing visual cues such as color changes (green, amber, red) to indicate the environmental efficiency of user actions. This UI can integrate directly with the virtual meeting platform, providing seamless feedback to users.

In various aspects, the method 400 can further include displaying proactive adjustment notifications via a smart alert system (block 440). A smart alert system can use machine learning algorithms to predict when user actions might lead to high carbon emissions. The smart alert system can proactively suggest adjustments based on these predictions. These alerts can be personalized based on user behavior patterns and meeting contexts, making them more relevant and actionable.

In various aspects, the method 400 can further include offering adaptive configuration recommendations through a configuration management dashboard (block 442). A configuration management dashboard can provide specific, actionable advice for optimizing both cloud services and local application settings. This might include recommendations for data compression, resolution adjustments, and cloud resource scaling, tailored to the specific needs of each meeting setup.

In various aspects, the method 400 promotes environmentally friendly practices with a behavioral recommendation engine. Incorporates a behavioral recommendation engine that analyzes past user actions and current settings to suggest more environmentally friendly practices. This engine can support decisions like scheduling meetings during off-peak energy hours or adjusting participant lists to essential personnel only.

In various aspects, the method 400 is a carbon footprint monitoring method. In response to a virtual meeting's emissions exceeding, for example, 0.004 kg $CO_2$ per hour for each participant, it is flagged as higher than the desired environmental impact. A meeting with 25 participants should not exceed 0.1 kg of $CO_2$ in total for one hour, in accordance with various aspects. If it does, the system can suggest corrective actions such as reducing video quality, optimizing data transmission, or scheduling during hours with higher renewable energy availability.

An example algorithm for calculating energy consumption is provided as:

$$\text{Energy (kWh)} = \text{Usage Time (hours)} \times \text{Power (kW)} \qquad \text{(Eq. 1)}$$

Standard power consumption varies for different features. For example, standard power consumption for video can be 0.05 kW, audio can be 0.01 kW, and screen sharing can be 0.02 kW.

An example algorithm for calculating emissions is provided as:

$$\text{Emissions (kg CO}_2\text{)} = \text{Energy (kWh)} \times \text{Emission Factor} \qquad \text{(Eq. 2)}$$

where the emission factor is assumed to be 0.4 kg $CO_2$/kWh.

In various aspects, the method can include counting a frequency of infractions. For example, the method can include counting how many times a user or a feature exceeds the "medium" threshold during a given period.

As an example, a team meeting including 3 participants can have a duration of 2 hours. A first participant, Tina, can have video on, audio on, no screen sharing. A second participant, Jill, can have audio only. A third participant, Steve, can have video on, screen sharing. Energy consumption for the participants can be calculated as follows:

- Tina: 2 hours×(0.05 kW+0.01 kW)=0.12 kWh

- Jill: 2 hours×0.01 kW=0.02 kWh

- Steve: 2 hours×(0.05 kW+0.02 kW)=0.14 kWh

Carbon Emissions for the participants can be calculated as follows:

- Tina: 0.12 kWh×0.4 kg $CO_2$/kWh=0.048 kg $CO_2$
- Jill: 0.02 kWh×0.4 kg $CO_2$/kWh=0.008 kg $CO_2$
  0.02 kWh×0.4 kg CO2/kWh=0.008 kg CO2
- Steve: 0.14 kWh×0.4 kg $CO_2$/kWh=0.056 kg $CO_2$

Benchmark comparisons for the participants can be calculated as follows:

- Tina: Good (< 0.1 kg $CO_2$/hour)
- Jill: Good (< 0.1 kg $CO_2$/hour)
- Steve: Good (< 0.1 kg $CO_2$/hour)

Infraction counts for the participants can be calculated as follows:

- No infractions as all users are within the "Good" range.

The method addresses the environmental challenges associated with virtual meetings. Therefore, its precision in measuring carbon emissions, coupled with proactive optimization recommendations, distinguishes it as a pioneering solution in the field of digital sustainability. With its systematic approach and innovative features, the method is poised to revolutionize how organizations and individuals conduct remote collaborations while promoting a greener and more eco-conscious approach to digital communication.

**Example use-cases where user-directed meeting behaviors trigger corrective actions using method:**

Over-invitation: A user invites 50 participants to a routine status update meeting, where typically only 5 are actively needed.
Corrective Action: The system automatically suggests limiting participants or converting to a webinar format where fewer active connections are needed, thus reducing server load and energy consumption.
Multiple Devices per Participant: Participants join the meeting from multiple devices (e.g., laptop and smartphone) simultaneously.
Corrective Action: The system detects multiple logins from the same user and prompts to disconnect additional devices to save energy.
High-Resolution Video for Simple Discussions: The meeting is set to use high-definition video for a text-based discussion.
Corrective Action: The system recommends switching to audio-only or lowering video quality to save bandwidth and reduce energy usage.
Excessive Use of Dynamic Backgrounds: Participants use resource-intensive dynamic backgrounds unnecessarily.
Corrective Action: The system suggests disabling these features unless necessary or replacing them with static images to decrease GPU and CPU load.
Unnecessary Screen Sharing: Screen sharing is left on continuously by a participant, even when not actively presenting.
Corrective Action: The system alerts the user to turn off screen sharing when it's not in use to reduce data transmission and processing power.
Use of Uncompressed Codecs: The meeting employs uncompressed codecs which require higher bandwidth and energy.
Corrective Action: The system identifies the codec being used and suggests switching to a compressed codec to optimize data usage and minimize the energy footprint.
Long Duration with Idle Participants: A meeting is scheduled for an hour but frequently runs longer with many participants remaining idle.
Corrective Action: The system monitors engagement and suggests ending the meeting or prompting idle users to disconnect if their participation is no longer necessary.

<u>Excessive Data Storage Post-Meeting:</u> All meetings are automatically recorded and stored indefinitely, regardless of importance or necessity.

Corrective Action: The system reviews storage practices and recommends deleting or archiving recordings older than a certain date, or not recording meetings with low relevance.

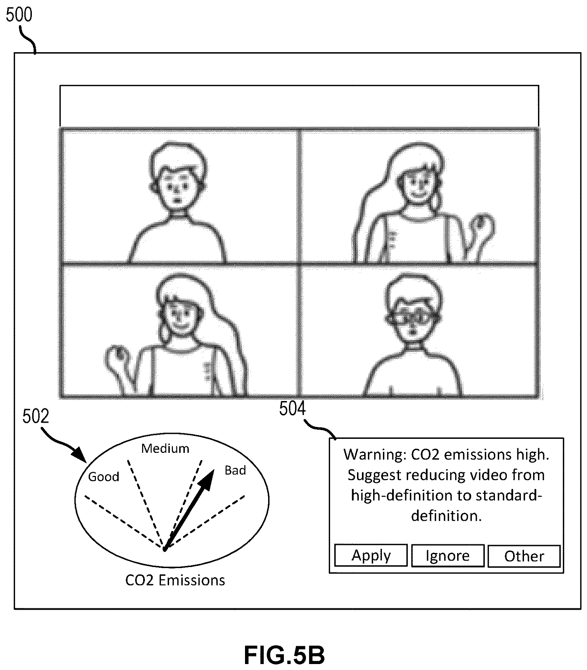

FIG. 5A and FIG. 5B are a graphical user interface (GUI) 500 of an example virtual meeting program that outputs for display to a participant of a virtual meeting environmental impact metrics 502 including $CO_2$ emissions of the resources used by the distributed computer system based on the power usage of the resources. In various aspects, the environmental impact metrics can be displayed as a meter of $CO_2$ emissions. For example, the environmental impact metrics 502 can be displayed as a meter with an arrow that pivots to indicate the $CO_2$ emissions. The environmental impact metrics 502 can be a color-coded meter on a meeting dashboard that displays the environmental footprint of the meeting in real-time, for example ranging from green (low impact) to red (high impact).

In FIG. 5A, the system is outputting a good $CO_2$ emissions rate for the distributed computer system. In FIG. 5B, the system is outputting a bad $CO_2$ emissions rate for the distributed computer system. In response to a medium and/or a bad $CO_2$ emissions rate being calculated, the system can further output a prompt 504 with a suggestion for executing a remedial measure that reduces $CO_2$ emissions created by the distributed computer system. The user can accept or ignore the prompt 504. The user can be presented with an "other" button to select other remedial options. In this manner, the system enables users to control $CO_2$ emissions and power wastage by the distributed computer system. In various aspects, the remedial measures identified in the recommendations to reduce $CO_2$ emissions and wasted power may be executed by a user or automatically executed by script programs.

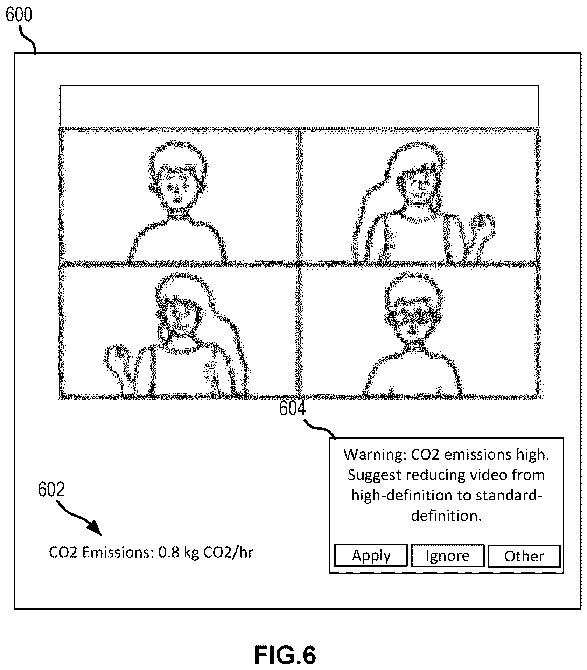

FIG. 6 is a GUI 600 of an example virtual meeting program that outputs for display to a participant of a virtual meeting environmental impact metrics 602 including $CO_2$ emissions of the resources used by the distributed computer system based on the power usage of the resources. The GUI 600 can be similar to the GUI 500 of FIG. 5A and FIG. 5B, except that the environmental impact metrics 602 are displayed as a numerical value of the $CO_2$ emissions of the resources used by the distributed computer system instead of as a meter with an arrow. The environmental impact metrics 602 can be color-coded, for example ranging from green (low impact) to red (high impact). The system can further output a prompt 604 with a suggestion for executing a remedial measure that reduces $CO_2$ emissions created by the distributed computer system.

**Example Scenario:**

Karen's day is a series of conscientious decisions aimed at reducing her carbon footprint and promoting environmental sustainability. Here's how her day unfolds, itemized for succinctness:

<u>Morning Routine:</u> Sprinkles coffee grounds in her garden as a natural fertilizer, reducing waste and enriching soil without chemical additives. Turns off all the lights in her house as she leaves, conserving electricity and reducing unnecessary energy consumption.

<u>Commute to Work:</u> Drives to work in her electric car, opting for an electric vehicle over gas-powered alternatives to minimize air pollution and greenhouse gas emissions. Picks up coworkers for a carpool, reducing the number of vehicles on the road, which lowers overall emissions and traffic congestion. Chooses to take the stairs instead of the elevator upon arriving at her workplace, saving on the electrical energy consumed by elevators and adding a bit of physical activity to her day.

<u>At Work:</u> Signs into her online collaboration utility for a virtual meeting and enables the low-carbon footprint feature. A color-coded meter on her meeting dashboard displays the environmental footprint of the meeting in real-time, ranging from green (low impact) to red (high impact). This feature helps Karen and her colleagues instantly understand the ecological cost of their virtual interaction. The utility offers concise suggestions to reduce carbon emissions during the meeting, such as switching to audio-only mode or adjusting video quality settings for energy conservation. Each suggestion comes with a brief explanation of its environmental benefit. The low-carbon footprint feature provides a breakdown of the carbon footprint by category (e.g., server energy usage, data transmission, participant locations), allowing Karen and her team to identify high-emission areas and consider more sustainable options. At the end of the meeting, a summary of the overall environmental impact is presented, quantifying the carbon emissions generated. This summary reinforces the importance of adopting eco-friendly communication practices by providing a clear understanding of the ecological cost associated with their virtual interactions.

<u>Process:</u>

In various aspects, an automated computer-implemented process can be executed by a monitoring server for real-time environmental impact assessment of a distributed computer system. The process includes receiving power metrics from metrics sources, the power metrics representing power usage by resources of the distributed computer system. The process further includes determining environmental impact metrics that represent amounts of $CO_2$ emissions created by the distributed computer system. The process further includes comparing the environmental impact metrics with a $CO_2$ emissions benchmark. The process further includes determining that the environmental impact metrics exceed the $CO_2$ emissions benchmark. The process further includes outputting for display to a participant of a virtual meeting a prompt with a suggestion for executing a remedial measure that reduces $CO_2$ emissions created by the distributed computer system.

In various aspects, the determining environmental impact metrics includes computing $CO_2$ emissions of the resources used by the distributed computer system based on the power usage of the resources.

The process can further include automatically executing the remedial measure that reduces $CO_2$ emissions created by the distributed computer system.

The process can further include outputting for display to a participant of the virtual meeting a user interface with environmental impact indicators based on the $CO_2$ emissions created by the distributed computer system.

In various aspects, the metrics sources include a virtual object. In various aspects, the metrics sources include a physical object. In various aspects, the metrics sources include a resource for the distributed computer system.

In various aspects, the remedial measure includes reducing a number of participants in the virtual meeting, reducing a duration of the virtual meeting, reducing a data transmission rate, and/or reducing a resolution of a video stream in the virtual meeting.

Computer System:

In various aspects, a computer system can monitor real-time environmental impact of a distributed computer system. The computer system includes one or more processors, one or more data-storage devices, and machine-readable instructions stored in the one or more data-storage devices that when executed using the one or more processors controls the computer system to preform operations. The operations include receiving power metrics from metrics sources, the power metrics representing power usage by resources of the distributed computer system. The operations further include determining environmental impact metrics that represent amounts of $CO_2$ emissions created by the distributed computer system. The operations further include comparing the environmental impact metrics with a $CO_2$ emissions benchmark. The operations further include determining that the environmental impact metrics exceed the $CO_2$ emissions benchmark. The operations further include outputting for display to a participant of the virtual meeting a prompt with a suggestion for executing a remedial measure that reduces $CO_2$ emissions created by the distributed computer system.

In various aspects, the determining environmental impact metrics includes computing $CO_2$ emissions of the resources used by the distributed computer system based on the power usage of the resources.

In various aspects, the operations further comprise automatically executing the remedial measure that reduces $CO_2$ emissions created by the distributed computer system.

In various aspects, the metrics sources include at least one of a virtual object, a physical object, and/or a resource for the distributed computer system.

In various aspects, the remedial measure includes reducing a number of participants in the virtual meeting, reducing a duration of the virtual meeting, reducing a data transmission rate, and/or reducing a resolution of a video stream in the virtual meeting.

Non-transitory computer-readable medium:

A non-transitory computer-readable medium can be encoded with machine-readable instructions that when executed using one or more processors of a computer system control the one or more processors to execute operations. The operations include receiving power metrics from metrics sources, the power metrics representing power usage by resources of a distributed computer system. The operations further include determining environmental impact metrics that represent amounts of $CO_2$ emissions created by the distributed computer system. The operations further include comparing the environmental impact metrics with a $CO_2$ emissions benchmark. The operations further include determining that the environmental impact metrics exceed the $CO_2$ emissions benchmark. The operations further include outputting for display to a participant of a virtual meeting a prompt with a suggestion for executing a remedial measure that reduces $CO_2$ emissions created by the distributed computer system.

System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se. Stated another way, the meaning of the term "non-transitory computer-readable medium" and "non-transitory computer-readable storage medium" should be construed to exclude only those types of transitory computer-readable media which were found in *In Re Nuijten* to fall outside the scope of patentable subject matter under 35 U.S.C. § 101.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching may be used throughout the figures to denote different parts but not necessarily to denote the same or different materials.

Methods, systems, and articles are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is intended to invoke 35 U.S.C. 112(f) unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. An automated computer-implemented process executed by a monitoring server for real-time environmental impact assessment of a distributed computer system, the process comprising:

   receiving power metrics from metrics sources, the power metrics representing power usage by resources of the distributed computer system;
   determining environmental impact metrics that represent amounts of $CO_2$ emissions created by the distributed computer system;
   comparing the environmental impact metrics with a $CO_2$ emissions benchmark;
   determining that the environmental impact metrics exceed the $CO_2$ emissions benchmark; and
   outputting for display to a participant of a virtual meeting a prompt with a suggestion for executing a remedial measure that reduces the $CO_2$ emissions created by the distributed computer system.

2. The process of claim 1, wherein the determining environmental impact metrics includes computing $CO_2$ emissions of the resources used by the distributed computer system based on the power usage by the resources.

3. The process of claim 1 or claim 2, further comprising automatically executing the remedial measure that reduces the $CO_2$ emissions created by the distributed computer system.

4. The process of any of claims 1 to 3, further comprising outputting for display to the participant of the virtual meeting a user interface with environmental impact indicators based on the $CO_2$ emissions created by the distributed computer system.

5. The process of any preceding claim, wherein the metrics sources include at least one of a virtual object or a physical object.

6. The process of any preceding claim, wherein the metrics sources include a resource for the distributed computer system.

7. The process of any preceding claim, wherein the determining the environmental impact metrics includes aggregating the power metrics from the metrics sources with at least one of data transmission rates, resource utilization levels, and cooling requirements, and converting these aggregated metrics into a representative amount of CO2 emissions created by the distributed computer system.

8. The process of any preceding claim, wherein the remedial measure includes at least one of:

   reducing a number of participants in the virtual meeting;
   reducing a duration of the virtual meeting;
   reducing a data transmission rate; or
   reducing a resolution of a video stream in the virtual meeting.

9. A non-transitory computer-readable medium encoded with machine-readable instructions that when executed using one or more processors of a computer system control the one or more processors to execute the process of any of claims 1 to 8.

10. A computer system that monitors real-time environmental impact of a distributed computer system, the computer system including one or more processors, one or more data-storage devices, and machine-readable instructions stored in the one or more data-storage devices that when executed using the one or more processors controls the computer system to preform operations comprising:

    receiving power metrics from metrics sources, the power metrics representing power usage by resources of the distributed computer system;
    determining environmental impact metrics that represent amounts of $CO_2$ emissions created by the distributed computer system;
    comparing the environmental impact metrics with a $CO_2$ emissions benchmark;
    determining that the environmental impact metrics exceed the $CO_2$ emissions benchmark; and
    outputting for display to a participant of a virtual meeting a prompt with a suggestion for executing a remedial measure that reduces the $CO_2$ emissions created by the distributed computer system.

11. The computer system of claim 10, wherein the determining environmental impact metrics includes computing $CO_2$ emissions of the resources used by the distributed computer system based on the power usage by the resources.

12. The computer system of claim 10 or claim 11, wherein the operations further comprise automatically executing the remedial measure that reduces the $CO_2$ emissions created by the distributed computer system.

13. The computer system of any of claims 10 to 12, wherein the metrics sources include at least one of a virtual object, a physical object, or a resource for the distributed computer system.

14. The computer system of any of claims 10 to 13, wherein the remedial measure includes at least one of:

    reducing a number of participants in the virtual meeting;
    reducing a duration of the virtual meeting;
    reducing a data transmission rate; or
    reducing a resolution of a video stream in the virtual meeting.

**FIG.1**

**FIG.2**

312

314

Cloud Services Interface

310

Internet

302

316

306

Local Network

Cloud Services Interface

308

304

FIG.3

400

Start

402
Initiate Data
Collection

404
Event-Driven
Programming

412
Comprehensive Data
Extraction via API Endpoints

406
Dual-Level
Metrics
Collection

414
Analyze
Server and
Application
Use

408
Cloud-Level Metrics
with New Relic

410
Application-Level
Metrics with
AppDynamics

416
Attribute 'Culprit' Behaviors

418
Calculate
Carbon Footprint in
Real-Time

420
Use Dedicated
Computational Model

434
Real-Time Feedback on
Carbon Footprint

422
Compare Against
Benchmarks

436
Provide
Immediate
User Feedback

424
Good:
< 0.1 kg CO2/h

426
Medium: 0.1 –
0.3 kg CO2/h

428
Bad:
> 0.3 kg CO2/h

438
Adaptive
UI with
Environmental
Impact
Indicators

440
Proactive
Adjustment
Notifications
via Smart
Alerts

442
Adaptive
Configuration
Recommen-
dations

430
Continue
Monitoring - Ignore

432
Apply Corrective
Action

End

FIG.4

FIG.5A

500

502

504

Medium

Good

Bad

CO2 Emissions

Warning: CO2 emissions high. Suggest reducing video from high-definition to standard-definition.

| Apply | Ignore | Other |

**FIG.5B**

600

602

CO2 Emissions: 0.8 kg CO2/hr

604

Warning: CO2 emissions high. Suggest reducing video from high-definition to standard-definition.

| Apply | Ignore | Other |

**FIG.6**

Europäisches
Patentamt

European
Patent Office

Office européen
des brevets

## EUROPEAN SEARCH REPORT

**Application Number**

EP 25 20 5079

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/029096 A1 (AURONGZEB DEEDER M [US] ET AL) 25 January 2024 (2024-01-25)<br>* paragraph [0011] - paragraph [0018]; figures 1, 2 *<br>* paragraph [0035] - paragraphs [0045], [0051] - [0061] *<br>* paragraph [0069] - paragraph [0087] *<br>----- | 1-14 | INV.<br>G06Q10/0631<br>G06Q10/0639<br>G06Q50/06<br>G06F11/30<br>G06F11/34<br>H04N7/15 |
| X | US 2024/127262 A1 (AURONGZEB DEEDER M [US] ET AL) 18 April 2024 (2024-04-18)<br>* paragraph [0011] - paragraph [0023]; figures 1, 2 *<br>* paragraphs [0030] - [0032], [0037] - paragraphs [0049], [0052] - [0053] *<br>* paragraphs [0056] - [0078], [0080] - paragraphs [0091], [0096] - [0109] *<br>* paragraph [0130] - paragraph [0152] *<br>----- | 1-14 | |
| X | US 2024/146871 A1 (RAMAKRISHNAN MALATHI [IN] ET AL) 2 May 2024 (2024-05-02)<br>* paragraphs [0001], [0011] - paragraph [0020]; figures 1, 2 *<br>* paragraphs [0027] - [0030], [0034] - paragraphs [0055], [0057] - [0082] *<br>* paragraph [0087] - paragraph [0112] *<br>----- | 1-14 | TECHNICAL FIELDS SEARCHED (IPC)<br><br>G06Q<br>G06F<br>H04N |
| X | US 2024/037002 A1 (AURONGZEB DEEDER M [US] ET AL) 1 February 2024 (2024-02-01)<br>* paragraphs [0012] - [0014], [0016] - paragraphs [0017], [0025]; figures 1, 2 *<br>* paragraphs [0031] - [0039], [0041] - paragraphs [0047], [0050] - [0078] *<br>* paragraphs [0080] - [0086], [0094] - paragraph [0105] *<br>-----<br>-/-- | 1-14 | |

The present search report has been drawn up for all claims

| Place of search | Date of completion of the search | Examiner |
|---|---|---|
| Munich | 21 January 2026 | Krafft, Gerald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

## EUROPEAN SEARCH REPORT

**Application Number**

EP 25 20 5079

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/126668 A1 (AURONGZEB DEEDER M [US] ET AL) 18 April 2024 (2024-04-18) * paragraphs [0014] - [0025], [0039] - paragraphs [0047], [0054] - [0083]; figures 1, 2 * * paragraphs [0089] - [0104], [0106] - paragraphs [0110], [0118] - [0127] * * paragraph [0130] - paragraphs [0145], [0147] - [0167] * | 1-14 | |
| A | FABER GRANT: "A framework to estimate emissions from virtual conferences", INTERNATIONAL JOURNAL OF ENVIRONMENTAL STUDIES, vol. 78, no. 4, 11 January 2021 (2021-01-11), pages 608-623, XP093355767, US ISSN: 0020-7233, DOI: 10.1080/00207233.2020.1864190 * page 608 - page 609 * * page 612 - page 615 * * page 617 - page 619 * | 1-14 | **TECHNICAL FIELDS SEARCHED (IPC)** |
| A | WATTENBACH LEONHARD L J WATTENBACH@STUDENT VU NL ET AL: "Do you have the energy for this meeting? an empirical study on the energy consumption of the Google Meet and zoom Android apps", PROCEEDINGS OF THE FIRST INTERNATIONAL WORKSHOP ON DESIGNING AND RUNNING PROJECT-BASED COURSES IN SOFTWARE ENGINEERING EDUCATION, ACMPUB27, NEW YORK, NY, USA, 17 May 2022 (2022-05-17), pages 6-16, XP058946070, DOI: 10.1145/3524613.3527812 ISBN: 978-1-4503-9303-4 * page 1 - page 14 * | 1-14 | |

The present search report has been drawn up for all claims

| Place of search | Date of completion of the search | Examiner |
|---|---|---|
| Munich | 21 January 2026 | Krafft, Gerald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 5079

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2026

| Patent document cited in search report | Publication date | Patent family member(s) | Publication date |
|---|---|---|---|
| US 2024029096 A1 | 25-01-2024 | NONE | |
| US 2024127262 A1 | 18-04-2024 | NONE | |
| US 2024146871 A1 | 02-05-2024 | NONE | |
| US 2024037002 A1 | 01-02-2024 | NONE | |
| US 2024126668 A1 | 18-04-2024 | NONE | |

EPO FORM P0459

For more details about this annex : see Official Journal of the European Patent Office, No. 12/82